# EUROPÄISCHE PATENTSCHRIFT

(11) **EP 0 606 637 B1**
(45) Veröffentlichungstag und Bekanntmachung des Hinweises auf die Patenterteilung: **22.05.1996**
(21) Anmeldenummer: 93120856.5
(22) Anmeldetag: 23.12.1993
(51) Int. Cl.: B29C 49/66

(54) **Verfahren zur Herstellung von Hohlkörpern aus thermoplastischen Kunststoffen**
Method for the production of hollow articles from thermoplastic materials
Procédé de fabrication de corps creuse en matériaux thermoplastiques

(30) Priorität: 13.01.1993 DE 4300597
(43) Veröffentlichungstag der Anmeldung: 20.07.1994
(73) Patentinhaber: BASF Aktiengesellschaft, D-67063 Ludwigshafen (DE)
(72) Erfinder: Sterzel, Hans-Josef, Dr., D-67125 Dannstadt-Schauernheim (DE)

(56) Entgegenhaltungen:
- DE-A- 1 604 544
- US-A- 2 834 154
- US-A- 3 246 062
- DATABASE WPI Week 8426, Derwent Publications Ltd., London, GB; AN 84-161339 & JP-A-59 085 722 (MITSUBISHI CHEM IND) 17. Mai 1984
- D. V. ROSATO 'Blow Molding Handbook' 1989 , CARL HANSER VERLAG , MUNICH

## Beschreibung

Die Erfindung betrifft ein verfahren entsprechend dem Oberbegriff des Anspruchs 1.

Es ist bekannt, Hohlkörper, z.B. Becher und Dosen, deren Halsdurchmesser kleiner als der größte Dosendurchmesser ist, Weithalsgefäße und Flaschen bis ca. 2 Ltr. Inhalt nach dem Streckblasverfahren herzustellen. Bevorzugte Werkstoffe sind Styrolpolymerisate und Polyethylenterephtalate. Dabei wird zunächst durch Spritzgießen ein amorpher vorformling mit einer Wanddicke von 3 bis 4 mm gefertigt. Der Wanddickenverlauf des Vorformlings ist durch das Spritzgießwerkzeug festgelegt, wogegen der Wanddickenverlauf am Blasteil noch durch den Temperaturverlauf am Vorformling beeinflußt werden kann. Das Aufblasen kann unmittelbar nach dem Spritzgießen oder nach entsprechenden Temperier- und Streckvorgängen erfolgen. Im allgemeinen wird der vorformling auf eine Temperatur von etwa 20°C bis etwa 80°C oberhalb der Glaserweichungstemperatur des Kunststoff erwärmt, in eine Form abgelegt und zu einem Hohlkörper streckblasgeformt.

Weiterhin ist es aus der JP-A-59 085 722 bekannt, Hohlkörper aus Polyethylenterephthalat durch Streckblasen herzustellen, wobei durch Zusatz von Wassertropfen in die Blasluft eine Oberflächenstruktur am Hohlkörper erzeugt wird. Durch das Anhaften von Wassertropfen am Vorformling wird dieser lokal abgekühlt und damit seine Dehnbarkeit an den entsprechenden Stellen verringert. Auf der Hohlkörperwand entstehen Bereiche mit hohem und niedrigem Dehnungsgrad.

Es sich gezeigt, daß wenn das Polyethylentherephthalat an einer Stelle mehr gestreckt wird, dort infolge Orientierungs- und Kristallisationsphänomene die Steifigkeit im Vergleich zur Umgebung überproportional ansteigt, so daß nach infinitesimal kurzer Zeit die leichter dehnbare Umgebung stärker gestreckt wird und somit ein Ausgleich stattfindet. Die freiwerdende Kristallisationsenthalpie kann nicht schnell genug an die Umgebung abgeführt werden und führt zu einer gleichmäßigen Erhöhung der Materialtemperatur während des Streckvorgangs in Abhängigkeit vom jeweils erzielten kristallinen Anteil. Bei einer Schmelzenthalpie von ca. 120 J/g und einer spez. Wärme von 1,55 H7g x °K entspricht dies einer Temperaturerhöhung um 8 Grad pro 10 % Erhöhung des Kristallinitätsgrades. Bei den üblicherweise erreichten 70 % Endkristallinität beträgt die Temperaturerhöhung somit 56 Grad.

Ein gleichmäßiges Aufblasen setzt damit auch eine geringe Abhängigkeit der Steifigkeit von der Temperatur voraus. Andernfalls wird an einer Stelle mit lokal erhöhter Verstreckung der Temperaturanstieg ein rasches Abfallen der Schmelzesteifigkeit bewirken und damit ein Überstrecken an dieser Stelle.

Dieser Selbstregulierungsmechanismus greift jedoch nicht bei allen, zu amorphen Vorformlingen verarbeitbaren Polymeren, insbesondere nicht bei Copolyester, Copolyamiden, aliphatischen Polyester wie Polylactiden oder auch Polyolefinen wie Poly-3-Methyl-1-buten oder Poly-4-Methyl-penten-1. Derartige Polymere weisen Glaserweichungstemperaturen unterhalb 70°C auf bei Kristallitschmelztemperaturen oberhalb 120°C und sollten deshalb bei Temperaturen um 100°C leicht durch Streckblasen ihrer amorphen Vorformlinge zu Hohlkörpern verarbeitbar sein. Beim Aufblasen solcher Vorformlinge kommt es indes häufig zu Fehlblasungen, infolge lokaler Überstreckung, die durch die freiwerdende Kristallisationswärme und damit verbundene Reduzierung der Steifigkeit verursacht wird.

Mit der Erfindung soll ein Verfahren der einleitend angegebenen Gattung geschaffen werden, welches auch die Verarbeitung von Polymeren erlaubt, deren Steifigkeit während des Aufblasvorgangs aufgrund von Temperaturerhöhung erheblich gemindert wird.

Zur Lösung dieser Aufgaben wird die Maßnahme nach dem Kennzeichen des Anspruchs 1 vorgeschlagen.

Erfindungsgemäß wird während des Streckblasens ein flüssiges Kühlmittel, vorzugsweise vollentsalztes und keimfreies Wasser, in einer solchen Menge in die Blasform zudosiert, die gerade ausreicht, daß die durch die Kristallisation freigesetzte Wärme durch die Verdampfungswärme des Kühlmittels kompensiert wird. Die Temperatur des Vorformlings wird während des Blasformens nicht oder nur unwesentlich erhöht. Hierzu enthält der Blasdorn eine zusätzliche Bohrung mit Düse für das Kühlmittel. Dieses wird über eine regelbare Pumpe in Mengen von (0,3-5) ml ± 0,02 ml zudosiert. Der Vorformulierung ist auf eine Temperatur von etwa 20°C bis etwa 80°C oberhalb der Glaserweichungstemperatur des Kunststoffs erwärmt. Das Kühlmittel wird zweckmäßig zu Beginn des Blasvorgangs in die Form zudosiert; in einer bevorzugten Ausführungsform des Verfahrens wird es zusammen mit dem Blasgas eingebracht und damit in seiner Menge über den gesamten Aufblasvorgang verteilt. Zur Vermeidung von Oberflächenstrukturen durch zu große Flüssigkeitstropfen wird das Kühlmittel vorzugsweise über einen Ultraschallzerstäuber im Blasluftstrom versprüht, wobei Tröpfchengrößen von 10 bis 30 µm erreichbar sind, die auf der inneren Oberfläche des Vorformlings eine zusammenhängende dünne Schicht ausbilden. Die Kühlmittelmenge kann durch einfache Vorversuche leicht ermittelt werden. Sie ergibt sich für Wasser als Kühlmittel annähernd nach folgender Beziehung:
mH₂O ∼ (Masse des Hohlkörpers x Kristallisationswärme pro Gramm Polymer x Kristalliner Anteil zu Ende des Blasprozesses/Verdampfungswärme für ein Gramm Wasser)
Der in der Form sich bildende Kühlmitteldampf wird am Ende des Blasvorgangs zusammen mit dem komprimierten Blasgas nach außen abgeführt. Ein Nachtrocknen der Hohlkörper ist nicht erforderlich.

Nach dem erfindungsgemäßen Verfahren werden Hohlkörper mit sehr guten mechanischen Eigenschaften, geringer Permeation gegenüber Wasser, Aromastoffen und Gasen sowie hohem Oberflächenglanz erhalten.

### Beispiel 1 (Vergleichsbeispiel)

Poly-L-Lactid mit einer inhärenten Viskosität von 1.59 (100 ml/g), gemessen als 0,1%ige Lösung in Chloroform bei 25°C wurde 10 h bei 120°C unterhalb 10 mbar getrocknet und danach unter Argon als Schutzgas in einer Spritzgießmaschine bei 205°C aufgeschmolzen und die Schmelze in eine auf 20°C temperierte Form gespritzt.

Es wurden zylindrische Vorformlinge hergestellt, mit Schraubgewinde und Bund mit ca. 25 mm Länge, kugelförmigem Boden, Außendurchmesser ca. 26 mm, Innendurchmesser ca. 19,4 mm, Wandstärke 3,3 mm, aufblasbare Länge ca. 120 mm, Gesamtgewicht 45,6 g.

Aufgrund der niedrigen Formtemperatur waren die Vorformlinge amorph. Zum Streckblasen wurden die Vorformlinge unter Rotation um die Längsachse mittels Infrarotstrahler in verschiedenen Versuchen auf 80 bis 140°C erwärmt; nach 5 bis 10 Sekunden Temperaturausgleichszeit wurden die erwärmten Vorformlinge in eine Form abgelegt und streckblasgeformt.

Die Verstreckung erfolgte inhomogen, wodurch keine vollständig aufgeblasenen Flaschen erhalten wurden. Je nach Temperaturbedingungen platzte der Vorformling beim Aufblasen an verschiedenen Stellen unter Überstreckung auf Wanddicken von 0,035 mm auf. Die regulär verstreckten Teile wiesen bei Wanddicken um 0,25 mm Steifigkeiten (Zug-E-Modul) von 5,500 N/mm² bei Raumtemperatur auf.

### Beispiel 2 (erfindungsgemäß)

Die Vorformlinge aus Beispiel 1 wurden mittels Infrarotstrahler auf 100°C erhitzt. Nach dem Einschwenken in die Form wurde der Vorformling aufgeblasen, wobei zusammen mit der Blasluft 1,0 g Wasser in den Vorformling versprüht wurden.

Es wurden einwandfreie Flaschen mit hohem Oberflächenglanz und E-Modulen am auf 0,25 mm verstreckten Mantel um 5,500 N/mm² erhalten.

## Patentansprüche

1. Verfahren zur Herstellung von Hohlkörpern aus thermoplastischen Kunststoffen, bei dem ein amorpher Vorformling spritzgegossen, auf eine Temperatur von etwa 20°C bis etwa 80°C oberhalb der Glaserweichungstemperatur des Kunststoffs erwärmt, in eine Form abgelegt und zu einem Hohlkörper streckblasgeformt wird, wobei während des Streckblasens ein flüssiges Kühlmittel in die Form zudosiert wird, dadurch gekennzeichnet, daß das flüssige Kühlmittel in einer solchen Menge in die Form zudosiert wird, daß die Temperatur des Vorformlings annähernd konstant bleibt oder sich nur unwesentlich erhöht.

2. Verfahren nach Anspruch 1, dadurch gekennzeichnet, daß das flüssige Kühlmittel zusammen mit dem Blasgas in den vorformling eingebracht wird.

3. Verfahren nach Anspruch 1, dadurch gekennzeichnet, daß als flüssiges Kühlmittel Wasser verwendet wird.

## Claims

1. A process for the production of hollow articles from thermoplastics, in which an amorphous parison is injection-molded, warmed to from about 20 to about 80°C above the glass transition temperature of the plastic, placed in a mold and stretch blow molded to give a hollow article, where a liquid coolant is metered into the mold during the stretch blow molding in such an amount that the temperature of the parison remains approximately constant or increases only insignificantly.

2. A process as claimed in claim 1, wherein the liquid coolant is introduced into the parison together with the blowing gas.

3. A process as claimed in claim 1, wherein the liquid coolant used is water.

## Revendications

1. Procédé de fabrication de corps creux en matière synthétique thermoplastique, pour lequel une ébauche pré-formée amorphe est moulée par injection, chauffée à une température d'à peu près 20°C à à peu près 80°C, au-dessus de la température de ramollissement vitreux, posée dans un moule et formée par étirage-soufflage pour donner un corps creux, un produit réfrigérant liquide étant amené de façon dosée dans le moule pendant l'étirage-soufflage, caractérisé en ce que le produit réfrigérant liquide est amené de façon dosée dans le moule en une quantité telle que la température de l'ébauche pré-moulée reste à peu près constante ou bien n'augmente que de façon négligeable.

2. Procédé selon la revendication 1, caractérisé en ce que le produit de réfrigération liquide est introduit dans l'ébauche de pré-moulage conjointement avec le gaz de soufflage.

3. Procédé selon la revendication 1, caractérisé en ce qu'on utilise de l'eau comme produit de réfrigération liquide.
